# EUROPÄISCHE PATENTSCHRIFT

(11) **EP 4 506 718 B1**
(45) Veröffentlichungstag und Bekanntmachung des Hinweises auf die Patenterteilung: **10.09.2025**
(21) Anmeldenummer: 24187186.2
(22) Anmeldetag: 08.07.2024
(51) Int. Cl.: G01S 7/03, G01S 13/931, H01Q 1/32, H01Q 21/06

(54) **RADARGERÄT**
RADAR APPARATUS
DISPOSITIF RADAR

(30) Priorität: 11.08.2023 DE 102023121555
(43) Veröffentlichungstag der Anmeldung: 12.02.2025
(73) Patentinhaber: SICK AG, 79183 Waldkirch (DE)
(72) Erfinder: Kronauge, Dr. Matthias, 21033 Hamburg (DE)
(74) Vertreter: Manitz Finsterwald Patent- und Rechtsanwaltspartnerschaft mbB

(56) Entgegenhaltungen:
- EP-B1- 1 684 087
- DE-A1- 102021 118 076
- US-A1- 2018 172 813

## Beschreibung

Die vorliegende Erfindung betrifft ein Radargerät mit einem Antennenarray, welches zumindest eine erste Antenne und eine zweite Antenne aufweist.

Die Druckschrift US 2018/172813 A1 offenbart ein Radar-Gerät gemäß dem Oberbegriff des Anspruchs 1 und ein Verfahren zum Betreiben eines Radar-Geräts gemäß dem Oberbegriff des Anspruchs 13.

Solche Radargeräte werden in verschiedenen mobilen und stationären Anwendungen eingesetzt, um Objekte, wie Hindernisse, Personen, Gegenstände und dergleichen zu erfassen. Beispielsweise kann ein autonom fahrendes Transportfahrzeug für automatisierte Prozesse (sog. AGV - Automated Guided Vehicle) in Fabrikhallen oder Lagerhallen mit einem solchen Radargerät ausgestattet sein, um Hindernisse zu erkennen und den Hindernissen auszuweichen. Das Radargerät kann dazu sowohl die Entfernung als auch die Richtung und/oder Größe des Hindernisses erkennen. Dazu wird von einem Transceiver das Antennenarray angesteuert, um Funkwellen, beispielsweise gerichtet, auszusenden und von Objekten rückgestrahlte Funkwellen zu erkennen.

Für solche autonom fahrenden Fahrzeuge und auch für andere Anwendungen können sicherheitsgerichtete Sensoren benötigt werden, welche eine zuverlässige Selbstüberprüfung ermöglichen. Bei solchen sicheren Sensoren ist üblicherweise eine Redundanz in der Hardware erforderlich, um Fehlerzustände sicher detektieren zu können.

Bei modernen Radargeräten kommen häufig vorgefertigte Transceiver (d.h. Sende-Empfänger) zur Anwendung, die über keine Redundanz verfügen. Durch eine Verdoppelung sowohl des Transceivers als auch des Antennenarrays würde zwar die für sicherheitsgerichtete Anwendungen erforderliche Redundanz geschaffen, allerdings mit dem Nachteil eines sehr großen Radargeräts.

Es ist daher die der Erfindung zugrunde liegende Aufgabe, ein Radargerät anzugeben, welches in sicherheitsgerichteten Anwendungen einsetzbar ist, trotzdem aber kompakt ausgebildet werden kann.

Diese Aufgabe wird durch ein Radargerät gemäß Anspruch 1 gelöst.

Das erfindungsgemäße Radargerät umfasst ein Antennenarray, welches zumindest eine erste Antenne und eine zweite Antenne aufweist. Das Radargerät umfasst zudem zumindest einen ersten Transceiver und einen zweiten Transceiver. Sowohl der erste Transceiver als auch der zweite Transceiver stehen mit der ersten Antenne und der zweiten Antenne jeweils in Signalverbindung.

Die Erfindung geht also von der Erkenntnis aus, dass das Antennenarray nicht verdoppelt werden muss, um eine redundante Hardware zu ermöglichen. Erfindungsgemäß werden vielmehr zwei Transceiver verwendet, welche beide mit denselben Antennen verbunden sind. Es benutzen also zwei Transceiver dasselbe Antennenarray. Dadurch können die von dem ersten Transceiver erfassten Daten mit den vom zweiten Transceiver erfassten Daten verglichen werden, um Fehlfunktionen im Radargerät zu erkennen. Bei den Fehlfunktionen kann es sich beispielsweise um Störungen eines der Transceiver oder z.B. einen mechanischen Fehler am Antennenarray handeln.

Wie später noch genauer ausgeführt, kann beim gleichzeitigen Betrieb der beiden Transceiver die Antenne beispielsweise durch Zeitmultiplexing oder Frequenzmultiplexing zwischen den Transceivern aufgeteilt werden.

Erfindungsgemäß wird somit eine Doppelung nahezu des gesamten Systems und insbesondere der Signalverarbeitung ermöglicht, wobei die Größe des Radargeräts nahezu unverändert bleibt.

Generell dient das Radargerät dazu, Objekte zu erkennen. Dazu regen die Transceiver das Antennenarray an und senden Funkwellen in einen zu überwachenden Raum. Befindet sich im zu überwachenden Raum ein Objekt, kann ein Teil der Funkwellen von dem Objekt rückgestrahlt und durch das Antennenarray empfangen werden. Das rückgestrahlte Funksignale kann dementsprechend von den Transceivern erfasst und aus dem Signal auf die Anwesenheit, die Position und dergleichen des Objekts rückgeschlossen werden. Über eine Doppler-Verschiebung der Frequenz der empfangenen Funkwellen relativ zu den ausgesandten Funkwellen kann zudem auf eine Relativgeschwindigkeit des Objekts zum Radargerät geschlossen werden.

Durch die Erfassung von Objekten mittels Radar können Objekte auch zuverlässig bei schwieriger Sicht, beispielsweise aufgrund von Schnee, Regen, Nebel oder Staub, zuverlässig erkannt werden.

Das Radargerät kann schließlich Informationen zu den erfassten Objekten ausgeben, beispielsweise an eine Fahrzeugsteuerung eines Fahrzeugs, an welchem das Radargerät montiert ist. Das Radargerät kann auch bei stationären Anwendungen zum Einsatz kommen, beispielsweise bei einer Schweiß-Maschine, um das korrekte Einlegen eines Werkstücks und/oder das Nichtvorhandensein von Personen nahe dem Werkstück zu detektieren.

Das Radargerät kann also ausgebildet sein, Objekte in einem Abstand von weniger als 100 m, insbesondere in einem Abstand von weniger als 50 oder 10 m zu detektieren.

Der erste Transceiver ist ausgebildet, die erste Antenne als Sendeantenne und die zweite Antenne als Empfangsantenne zu nutzen. Zudem ist der zweite Transceiver ausgebildet, die zweite Antenne als Sendeantenne und die erste Antenne als Empfangsantenne zu nutzen. Die erste und die zweite Antenne werden also jeweils doppelt benutzt, einmal als Sendeantenne, d.h. zum Abstrahlen von Funkwellen, für den einen Transceiver und zum anderen als Empfangsantenne, d.h. zum Empfangen der rückgestrahlten Funkwellen, für den anderen Transceiver.

Weiterbildungen der Erfindung sind der Beschreibung, den Zeichnungen sowie den Unteransprüchen zu entnehmen.

Gemäß einer Ausführungsform sind der erste Transceiver und der zweite Transceiver ausgebildet, die erste und/oder die zweite Antenne zeitlich nacheinander und/oder in verschiedenen Frequenzbereichen zu nutzen. Es kann also ein Zeitmultiplexing und/oder ein Frequenzmultiplexing erfolgen.

Beim Zeitmultiplexing kann beispielsweise der erste Transceiver die erste Antenne eine vorbestimmte Zeitdauer, beispielsweise 100 ms, zum Senden nutzen. Danach kann der zweite Transceiver die erste Antenne für eine weitere vorbestimmte Zeitdauer, beispielsweise ebenfalls 100 ms, zum Empfangen nutzen. Entsprechendes gilt für die zweite Antenne. Das Zeitmultiplexing kann derart schnell erfolgen, dass der erste und der zweite Transceiver Objekte im zu überwachenden Bereich praktisch zeitgleich erfassen können.

Das Frequenzmultiplexing kann alternativ oder zusätzlich zum Zeitmultiplexing genutzt werden. Durch das Frequenzmultiplexing können der erste und der zweite Transceiver unterschiedliche Frequenzen verwenden, sodass die beiden Transceiver gleichzeitig das Antennenarray zum Senden und Empfangen von Funksignalen nutzen können. Insbesondere sind die Transceiver leitungsgebunden mit der ersten und/oder zweiten Antenne, d.h. mit dem Antennenarray, gekoppelt.

Gemäß einer weiteren Ausführungsform umfasst die erste Antenne einen ersten Anschluss für den ersten Transceiver und einen, bevorzugt von dem ersten Anschluss separaten, zweiten Anschluss für den zweiten Transceiver. Alternativ oder zusätzlich kann die zweite Antenne einen ersten Anschluss für den ersten Transceiver und einen, bevorzugt von dem ersten Anschluss separaten, zweiten Anschluss für den zweite Transceiver umfassen. Die Transceiver können dementsprechend über separate Zuleitungen mit der jeweiligen Antenne verbunden sein. In entsprechender Weise können die Transceiver über separate Zuleitungen mit den jeweiligen (unten erläuterten) Teilantennen verbunden sein. Beispielsweise bei Patchantennen können sich die ersten und zweiten Anschlüsse jeweils gegenüberliegend, beispielsweise bezüglich eines Symmetriepunkts oder einer Symmetrieachse der Patchantenne.

Alternativ ist es auch möglich, dass die beiden Transceiver zumindest bereichsweise über dieselbe Zuleitung mit der jeweiligen Antenne (bzw. Teilantenne) verbunden sind. Es kann dementsprechend eine Zuleitung zur Antenne führen, wobei sich die Zuleitung dann teilt und Teilstücke der Zuleitungen zu den beiden Transceivern führen.

Gemäß einer weiteren Ausführungsform umfasst die erste Antenne und/oder die zweite Antenne mehrere Teilantennen. Wie später noch erläutert, kann es sich bei den Teilantennen beispielsweise um einzelne Patchantennen handeln. Die Teilantennen können von den Transceivern dann jeweils separat angesteuert werden, beispielsweise um eine Richtwirkung zu erzielen. Die Richtwirkung kann beispielsweise dadurch erzielt werden, dass ein Phasenversatz zwischen den Signalen der einzelnen Teilantennen erzeugt wird. Die Teilantennen können von den Transceivern auch separat ausgelesen werden, sodass sich eine Winkelauflösung des empfangenen Signals erzielen lässt. Auf diese Weise kann das Radargerät verschiedene Teile des zu überwachenden Bereichs nacheinander abtasten und gegebenenfalls dort vorhandene Objekte erkennen.

Grundsätzlich kann die erste Antenne also alle Teilantennen umfassen bzw. bezeichnen, die vom ersten Transceiver zum Senden verwendet werden. In entsprechender Weise kann die zweite Antenne alle Teilantennen umfassen bzw. bezeichnen, die vom ersten Transceiver zum Empfangen genutzt werden.

Gemäß einer weiteren Ausführungsform umfasst das Antennenarray eine dritte Antenne, welche mit den ersten und dem zweiten Transceiver in Signalverbindung steht. Die dritte Antenne kann sowohl vom ersten als auch vom zweiten Transceiver als Empfangsantenne genutzt werden. Die dritte Antenne wird bevorzugt also nicht als Sendeantenne genutzt werden.

Auch die dritte Antenne kann Teilantennen aufweisen. Die Ausführungen zu den Teilantennen der ersten und zweiten Antenne sowie zur Ausgestaltung der ersten und zweiten Antenne gelten für die dritte Antenne entsprechend.

Gemäß einer weiteren Ausführungsform weisen die erste Antenne und die zweite Antenne gleich viele Teilantennen auf. Dementsprechend kann die erste und die zweite Antenne beispielsweise 2, 3, 4, 5, 6, 7 oder 8 Teilantennen aufweisen. Alternativ ist es auch möglich, dass die erste und die zweite Antenne unterschiedlich viele Teilantennen aufweisen. So kann sich die Anzahl der Teilantennen insbesondere um eins unterscheiden. Beispielsweise kann die erste Antenne vier Teilantennen und die zweite Antenne drei Teilantennen umfassen.

Bei einer unterschiedlichen Anzahl kann der erste Transceiver beispielsweise im Vergleich zum zweiten Transceiver mit einer unterschiedlichen Anzahl von Teilantennen senden und mit einer unterschiedlichen Anzahl von Teilantennen empfangen.

Zudem ist es möglich, dass die Teilantennen alle identisch ausgebildet sind. Beispielsweise kann jede Teil Antenne mehrere Patchantennen umfassen, die (innerhalb der Teilantenne) jeweils identisch ausgebildet sind. Die Teilantennen selbst können zueinander ebenfalls identisch sein. Alternativ ist es möglich, dass die Teilantennen zumindest zum Teil unterschiedlich ausgebildet sind. Beispielsweise kann sich die Anzahl der Patchantennen in den jeweiligen Teilantennen unterscheiden.

Die Patchantennen einer Teilantenne können in einer geraden Linie hintereinander angeordnet sein. Die so definierte gerade Linie kann insbesondere parallel zu einer Geraden sein, die durch den ersten und den zweiten Transceiver verläuft. Die Teilantennen können parallel und/oder mit gleichen Abständen zueinander regelmäßig nebeneinander angeordnet sein. Beliebige weitere Anordnungen sind natürlich ebenfalls möglich.

Durch die Teilantennen kann eine Richtwirkung und damit ein Antennengewinn erzielt werden. Es kann durch die Teilantennen ein sogenanntes "Beamforming" erfolgen, durch welches die Winkelposition eines Objekts und/oder die Winkelgröße des Objekts erfasst werden kann. Aufgrund einer Signallaufzeit vom Aussenden des Funksignals bis zum Empfang des rückgestrahlten Funksignals kann auch eine Entfernung des Objekts ermittelt werden.

Gemäß einer weiteren Ausführungsform umfassen die erste Antenne und/oder die zweite Antenne eine oder mehrere Patchantennen, welche zumindest zum Teil, insbesondere in der Draufsicht, beispielsweise eine symmetrische, bevorzugt eine punktsymmetrische Form aufweisen. Wie oben schon ausgeführt können die Teilantennen also Patchantennen sein und/oder mehrere Patchantennen umfassen. Bevorzugt umfasst das Radargerät ausschließlich Patchantennen. Eine Patchantenne kann beispielsweise als ebene Metallfläche auf einer Leiterkarte ausgebildet sein. Unterhalb der Patchantenne kann auf einer anderen Ebene (d.h. auf einem anderen Layer) der Leiterkarte eine großflächige Metallisierung vorgesehen sein, die das Abstrahlen von Funksignalen in eine Vorzugsrichtung bewirkt.

Bevorzugt kann die Form der Antennen sowie die Anordnung des ersten Transceivers und des zweiten Transceivers achsen- und/oder punktsymmetrisch ausgebildet sein, wobei die Symmetrieachse bzw. der Symmetriepunkt mittig zwischen dem ersten und dem zweiten Transceiver liegen kann.

Gemäß einer weiteren Ausführungsform umfasst die Verbindung zwischen dem ersten Transceiver und der ersten Antenne und/oder der zweiten Antenne eine Mikrostreifenleitung. In entsprechender Weise kann die Verbindung zwischen dem zweiten Transceiver und der ersten Antenne und/oder der zweiten Antenne eine Mikrostreifenleitung umfassen. Die Mikrostreifenleitung kann durch eine sich längserstreckende Metallisierung auf einer Leiterkarte gebildet sein. Die Antennen, die Mikrostreifenleitung und die Transceiver sind bevorzugt, insbesondere auf derselben Seite, auf derselben Leiterkarte angeordnet.

Die mittels der Antennen ausgesandten und empfangenen Funkwellen können beispielsweise eine Frequenz zwischen 20 und 100 GHz aufweisen, bevorzugt zwischen 60 und 62 GHz.

Bei dem ersten und dem zweiten Transceiver kann es sich insbesondere um vorgefertigte Radar-ICs handeln, d.h. integrierte Schaltkreise mit einem separaten Gehäuse, wobei die Transceiver auf der Leiterkarte aufgelötet sein können.

Bevorzugt sind die Verbindungen zwischen den Transceiver und den Antennen, d.h. beispielsweise die Mikrostreifenleitungen, so ausgeführt, dass keine Überkreuzungen der Verbindungen vorhanden sind. Auf diese Weise kann ein übersprechen und eine unerwünschte Abstrahlung vermieden werden.

Gemäß einer weiteren Ausführungsform ist die erste Antenne und die zweite Antenne (und gegebenenfalls auch die dritte Antenne) zwischen dem ersten Transceiver und dem zweiten Transceiver angeordnet. Die Transceiver können dementsprechend in einer Draufsicht oberhalb und unterhalb der Antennen angeordnet sein. Auf diese Weise kann sich eine Art punktsymmetrischer Aufbau ergeben. Durch einen derartigen Aufbau kann die Anordnung der Verbindungen bzw. Mikrostreifenleitung erleichtert werden, da die Antennen bzw. Teilantennen auf einer Seite nur mit einem Transceiver verbunden werden müssen.

Ebenfalls ist es möglich, dass sich die Transceiver auf derselben Seite der ersten und/oder zweiten Antenne befinden. In diesem Fall können beispielsweise die oben genannten Abzweigungen in den Verbindungen zwischen Antenne und Transceiver verwendet werden.

Gemäß einer weiteren Ausführungsform umfasst das Radargerät eine Steuereinheit, welche sowohl mit dem erste Transceiver als auch mit dem zweite Transceiver in Signalverbindung steht und ausgebildet ist, von dem ersten Transceiver erfasste Daten mit von dem zweiten Transceiver erfassten Daten zu vergleichen.

Gemäß einer weiteren Ausführungsform ist die Steuereinheit ausgebildet, bei der Erkennung eines Unterschieds zwischen den von dem ersten Transceiver erfassten Daten und den von dem zweiten Transceiver erfassten Daten, ein Fehlersignal auszugeben.

Die Steuereinheit kann ausgebildet sein, ein oder mehrere verschiedene Teile der Daten der Transceiver zu vergleichen. So kann die Steuereinheit beispielsweise die Signalpegel der empfangenen Funkwellen, die Signallaufzeit zum Objekt und zurück und/oder die Richtung, aus welcher die Signale empfangen werden vergleichen.

Ebenfalls ist es möglich, dass die Steuereinheit die Daten auf einer abstrakteren Ebene vergleicht. So kann die Steuereinheit beispielsweise ausgebildet sein, zu überprüfen, ob ein Objekt sowohl von dem ersten Transceiver als auch von dem zweiten Transceiver erfasst wurde. Wird nun ein Unterschied in den Daten erkannt, beispielsweise wenn eine Differenz der Signalpegel am ersten und zweiten Transceiver einen vorbestimmten Schwellenwert überschreitet oder wenn einer der Transceiver kein Objekt erkennt, wenn der andere Transceiver ein Objekt meldet, kann das Fehlersignal ausgegeben werden. Das Fehlersignal kann dann dazu führen, dass eine sicherheitsgerichtete Aktion ausgeführt wird, beispielsweise ein Stopp oder ein Verlangsamen der Maschine oder des Fahrzeugs, an welchem das Radargerät befestigt ist.

Gemäß einer weiteren Ausführungsform sind der erste Transceiver und der zweite Transceiver baugleich. Der erste Transceiver und der zweite Transceiver können dementsprechend dieselbe Art von integriertem Schaltkreis sein. Durch die Verwendung baugleicher Transceiver wird eine hohe Vergleichbarkeit der von den Transceivern erfassten Daten ermöglicht.

Das hierin beschriebene Radargerät kann auch in einer Radargeräteanordnung eingesetzt werden. Die Radargeräteanordnung kann mehrere Radargeräte umfassen, welche insbesondere nebeneinander und/oder benachbart zueinander angeordnet sind. Die einzelnen Radargeräte der Anordnung können dann für einen jeweils kleineren Winkelbereich verwendet werden, um so insgesamt die Winkelauflösung der Anordnung zu steigern.

Weiterer Gegenstand der Erfindung ist ein Verfahren zum Betreiben eines Radargeräts, bei welchem zumindest ein erster Transceiver und ein zweiter Transceiver mit einer ersten und einer zweite Antenne verbunden werden und sowohl der erste Transceiver als auch der zweite Transceiver Funksignale über die erste und die zweite Antenne senden und/oder empfangen.

Für das Verfahren gelten die Ausführungen zu dem Radargerät entsprechend. Dies gilt insbesondere hinsichtlich Vorteilen und Ausführungsformen. Zudem versteht sich, dass sämtliche hierin genannten Merkmale miteinander kombiniert werden können, sofern nicht explizit etwas Gegenteiliges angegeben ist.

Nachfolgend wird die Erfindung rein beispielhaft unter Bezugnahme auf die Zeichnungen beschrieben. Es zeigen:
**Fig. 1** schematisch ein Radargerät sowie ein vom Radargerät erfasstes Objekt;
**Fig. 2** ein Radargerät mit einer ersten Ausführungsform eines Antennenarrays;
**Fig. 3** ein Radargerät mit einer zweiten Ausführungsform eines Antennenarrays;
**Fig. 4** ein Radargerät mit einer dritten Ausführungsform eines Antennenarrays;
**Fig. 5** ein Radargerät mit einer vierten Ausführungsform eines Antennenarrays;
**Fig. 6** ein Radargerät mit einer fünften Ausführungsform eines Antennenarrays, wobei die Transceiver auf derselben Seite des Antennenarrays angeordnet sind.

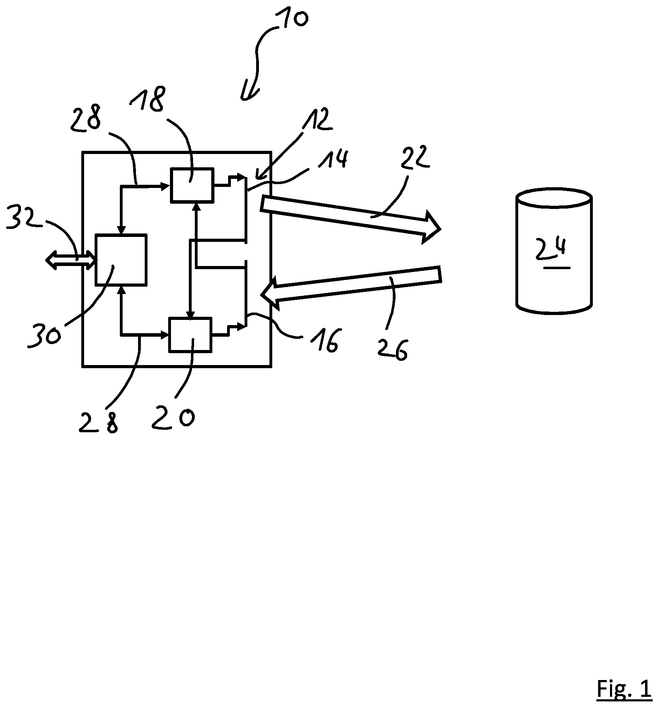

Fig. 1 zeigt ein Radargerät 10 mit einem Antennenarray 12, welches eine erste Antenne 14 und eine zweite Antenne 16 aufweist.

Das Radargerät 10 umfasst einen ersten Transceiver 18 und einen zweiten Transceiver 20, welche jeweils mit der ersten und der zweite Antenne 14, 16 signaltechnisch verbunden sind.

Beispielhaft ist in Fig. 1 ein Sendesignal 22 gezeigt, welches in einen zu überwachenden Raum abgestrahlt wird und dort auf ein Objekt 24 trifft. Durch das Objekt 24 wird ein Teil des Sendesignals 22 als Empfangssignal 26 zum Radargerät 10 zurückgestrahlt und dort von dem Antennenarray 12 empfangen. Das Empfangssignal 26 zu einem Zeitpunkt kann beispielsweise von dem ersten Transceiver 18 erfasst werden, woraufhin der erste Transceiver 18 das Objekt 24 detektiert.

Der erste Transceiver 18 und der zweite Transceiver 20 sind über Datenleitungen 28 mit einer Steuereinheit 30 gekoppelt. Die Steuereinheit 30 empfängt von den Transceivern 18, 20 erfasste Daten und vergleicht diese. Würde beispielsweise vom ersten Transceiver 18 ein Objekt als detektiert angezeigt, der zweite Transceiver 20 hingegen aber kein Objekt detektieren, so liegt ein Fehlerfall vor, in welchem die Steuereinheit 30 ein Fehlersignal über eine Schnittstelle 32 ausgibt.

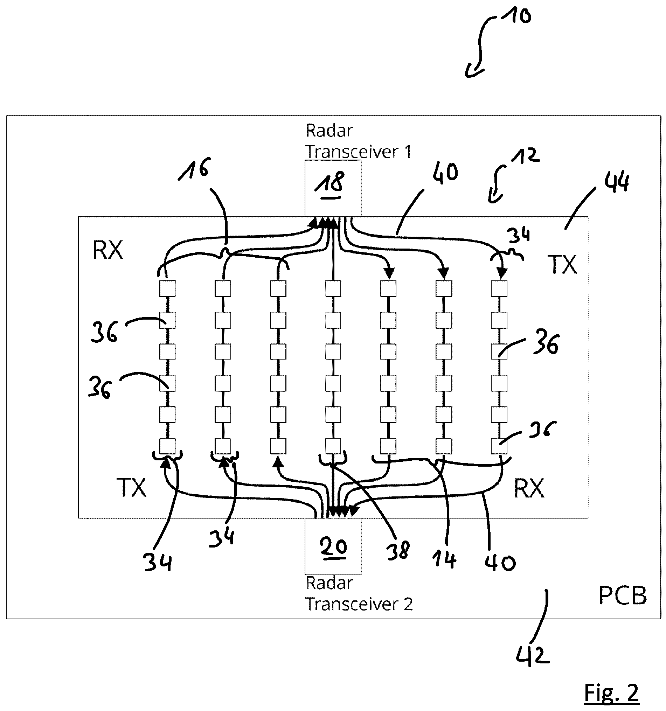

Fig. 2 zeigt eine Draufsicht auf ein Radargerät mit einer ersten (hier konkret gezeigten) Ausführungsform des Antennenarrays 12 mit Patchantennen 36. Das Antennenarray 12 umfasst sieben Teilantennen 34, von welchen jede sechs Patchantennen 36 umfasst. Die Patchantennen 36 sind jeweils quadratisch geformt und weisen allesamt die gleiche Form und Größe auf.

Jeweils sechs in Reihe geschaltete Patchantennen 36 bilden eine Teilantenne 34. Zwischen den einzelnen Patchantennen 36 kann jeweils auch eine Mikrostreifenleitung 40 als Verbindung zwischen den Patchantennen 36 vorgesehen sein. Die Patchantennen 36 einer Teilantenne 34 sind in einer geraden Linie hintereinander angeordnet. Die Teilantennen 34 sind parallel und mit gleichen Abständen regelmäßig nebeneinander angeordnet. Andere Anordnungen sind natürlich ebenfalls möglich.

Es ist zu erkennen, dass der erste Transceiver 18 drei der Teilantennen 34 als Sendeantennen verwendet (die drei in Fig. 2 rechts dargestellten Teilantennen 34). Diese drei Teilantennen 34 bilden gemeinsam also die erste Antenne 14. Drei weitere Teilantennen 34 (in Fig. 2 links dargestellt) werden vom erste Transceiver 18 als Empfangsantennen verwendet und bilden dementsprechend die zweite Antenne 16. Die Teilantennen 34 der erste Antenne 14 werden vom zweiten Transceiver 20 als Empfangsantenne verwendet, wohingegen die Teilantennen 34 der zweiten Antenne 16 vom zweiten Transceiver 20 als Sendeantennen verwendet werden.

Die mittlere Teilantenne 34 wird von beiden Transceivern 18, 20 als Empfangsantenne genutzt und bildet damit eine dritte Antenne 38. Beide Transceiver 18, 20 senden also jeweils mit drei Teilantennen 34 und empfangen mit vier Teilantennen 34.

Jede Teilantenne 34 ist über eine Mikrostreifenleitung 40 mit einem der Transceiver 18, 20 verbunden. Die Mikrostreifenleitungen 40 und die Patchantennen 36 sind auf einer einzigen Leiterkarte 42 angeordnet. Die Transceiver 18, 20 sind als Chips bzw. Radar-ICs ausgebildet und auf die Leiterkarte 42 aufgelötet.

Im Bereich unter den Patchantennen 36 ist eine Backplane 44 (d.h. eine Metallisierung auf einem anderen Layer der Leiterkarte 42) angebracht, um ein gerichtetes Abstrahlen des Sendesignals 22 zu ermöglichen.

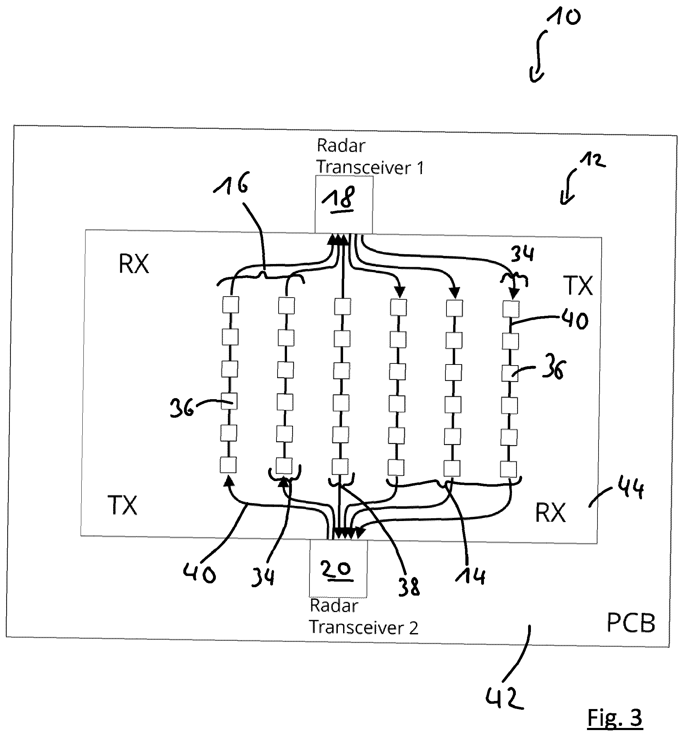

Fig. 3 zeigt eine zweite Ausführungsform des Antennenarrays 12. Bei der Ausführungsform von Fig. 3 wurde gegenüber Fig. 2 auf der linken Seite eine Teilantenne 34 entfernt. Dementsprechend verwendet der erste Transceiver 18 anstelle von vier Teilantennen 34 nur drei Teilantennen 34 zum Empfangen. Der zweite Transceiver 20 verwendet lediglich zwei Teilantennen 34 zum Senden.

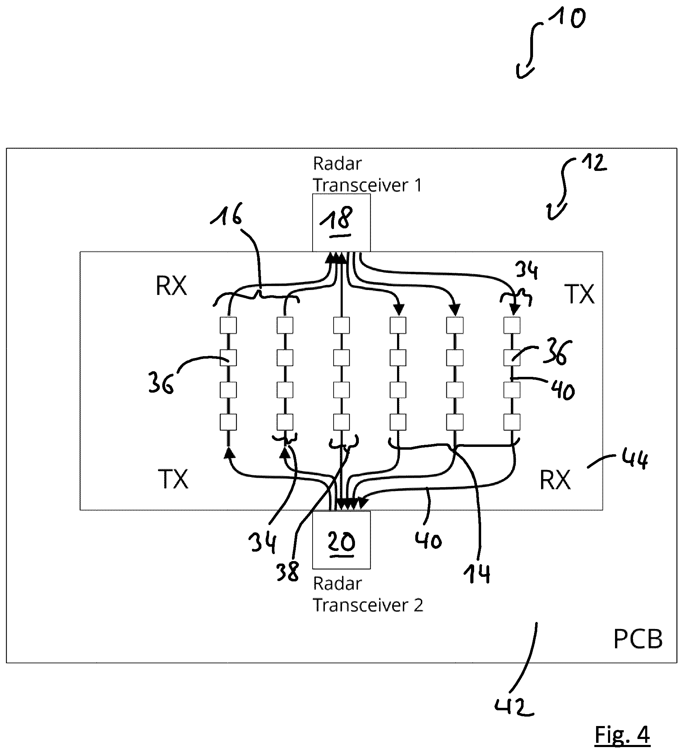

Fig. 4 zeigt eine dritte Ausführungsform des Antennenarrays 12. Im Vergleich zur Ausführungsform von Fig. 3 umfasst jede Teilantenne 34 lediglich 4 Patchantennen 36. Durch die Verwendung von weniger Patchantennen 36, die hintereinander in gerader Linie angeordnet sind, wird das Sendesignal 22 weniger stark in der Richtung der geraden Linie fokussiert. Dadurch kann sich ein anderer Abtastbereich bzw. ein anderer zu überwachender Raum ergeben.

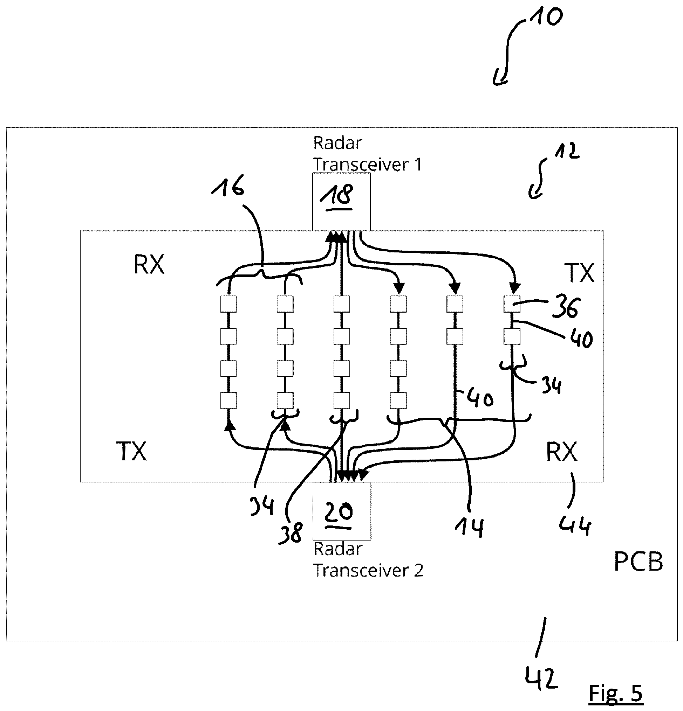

Fig. 5 zeigt eine vierte Ausführungsform des Antennenarrays 12. Diese Ausführungsform unterscheidet sich von Ausführungsform von Fig. 4 darin, dass zwei Teilantennen 34 der ersten Antenne 14 nur zwei hintereinandergeschaltete Patchantennen 36 aufweisen. Hierdurch kann sich wieder eine andere Abstrahlcharakteristik für das Sendesignal 22 und auch eine andere Empfangscharakteristik für das Empfangssignal 26 ergeben.

Bei den Ausführungsformen der Figuren 2 bis 5 befindet sich das Antennenarray 12 jeweils zwischen dem ersten Transceiver 18 und dem zweiten Transceiver 20. Zumindest die Ausführungsformen gemäß Figuren 2-4 sind zudem symmetrisch ausgebildet.

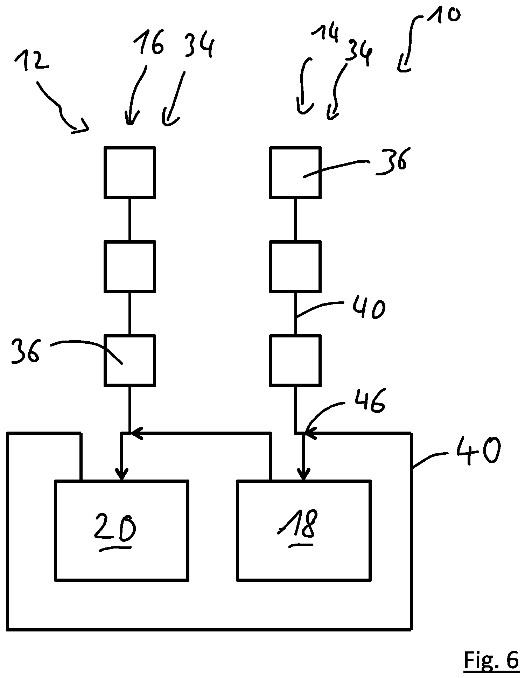

Fig. 6 zeigt nun eine fünfte Ausführungsform, bei welcher beide Transceiver 18, 20 auf derselben Seite des Antennenarrays (beispielsweise auf der Leiterkarte 42) angeordnet sind. Bei der Ausführungsform von Fig. 6 ist nur eine erste Antenne 14 und eine zweite Antenne 16 vorhanden, welche jeweils nur eine Teilantenne 34 mit drei in Reihe geschalteten Patchantennen 36 umfassen. Die Mikrostreifenleitungen 40, welche die Teilantennen 34 anschließen, umfassen eine Abzweigung 46 sodass jede der Teilantennen 34 zumindest bereichsweise über dieselbe Mikrostreifenleitung 40 mit dem ersten Transceiver 18 und auch mit dem zweiten Transceiver 20 verbunden ist.

Durch die Verwendung zweier Transceiver 18, 20, welche dasselbe Antennenarray 12 verwenden, kann eine Redundanz geschaffen werden, ohne das Radargerät 10 signifikant zu vergrößern. Das Radargerät 10 kann somit in sicheren Anwendungen bzw. sicherheitsgerichteten Anwendungen eingesetzt werden, da insbesondere die Steuereinheit 30 Fehler des Radargeräts 10 erkennen und ein entsprechendes Fehlersignal ausgeben kann.

### Bezugszeichenliste

- 10: Radargerät
- 12: Antennenarray
- 14: erste Antenne
- 16: zweite Antenne
- 18: erster Transceiver
- 20: zweiter Transceiver
- 22: Sendesignal
- 24: Objekt
- 26: Empfangssignal
- 28: Datenleitung
- 30: Steuereinheit
- 32: Schnittstelle
- 34: Teilantenne
- 36: Patchantenne
- 38: dritte Antenne
- 40: Mikrostreifenleitung
- 42: Leiterkarte
- 44: Backplane
- 46: Abzweigung

## Patentansprüche

1. Radar-Gerät (10) mit
- einem Antennenarray (12), welches zumindest eine erste Antenne (14) und eine zweite Antenne (16) aufweist,
- zumindest einem ersten Transceiver (18) und einem zweiten Transceiver (20),
wobei sowohl der erste Transceiver (18) als auch der zweite Transceiver (20) mit der ersten Antenne (14) und der zweiten Antenne (16) jeweils in Signalverbindung stehen,
wobei der erste Transceiver (18) ausgebildet ist, die erste Antenne (14) als Sendeantenne und die zweite Antenne (16) als Empfangsantenne zu nutzen, **dadurch gekennzeichnet, dass** der zweite Transceiver (20) ausgebildet ist, die zweite Antenne (16) als Sendeantenne und die erste Antenne (14) als Empfangsantenne zu nutzen.

2. Radar-Gerät (10) nach Anspruch 1,
wobei der erste Transceiver (18) und der zweite Transceiver (20) ausgebildet sind, die erste und/oder zweite Antenne (16) zeitlich nacheinander und/oder in verschiedenen Frequenzbereichen zu nutzen.

3. Radar-Gerät (10) nach einem der vorstehenden Ansprüche,
wobei die erste Antenne (14) einen ersten Anschluss für den ersten Transceiver (18) und einen, von dem ersten Anschluss separaten, zweiten Anschluss für den zweiten Transceiver (20) umfasst, und/oder wobei die zweite Antenne (16) einen ersten Anschluss für den ersten Transceiver (18) und einen, von dem ersten Anschluss separaten, zweiten Anschluss für den zweiten Transceiver (20) umfasst.

4. Radar-Gerät (10) nach einem der vorstehenden Ansprüche,
wobei die erste Antenne (14) und/oder die zweite Antenne (16) mehrere Teilantennen (34) umfasst.

5. Radar-Gerät (10) nach einem der vorstehenden Ansprüche,
wobei das Antennenarray (12) eine dritte Antenne (38) umfasst, welche mit dem ersten und dem zweiten Transceiver (20) in Signalverbindung steht, wobei der erste und/oder der zweite Transceiver (18, 20) bevorzugt ausgebildet sind, die dritte Antenne (38) als Empfangsantenne zu nutzen.

6. Radar-Gerät (10) nach Anspruch 4 oder 5,
wobei die erste Antenne (14) und die zweite Antenne (16), und bevorzugt die dritte Antenne (38), gleich viele oder unterschiedlich viele Teilantennen (34) aufweisen,
wobei bevorzugt die Teilantennen (34) jeweils identisch oder zumindest zum Teil unterschiedlich ausgebildet sind.

7. Radar-Gerät (10) nach einem der vorstehenden Ansprüche,
wobei die erste Antenne (14) und/oder die zweite Antenne (16) eine oder mehrere Patchantennen (36) umfassen, welche zumindest zum Teil insbesondere eine symmetrische, bevorzugt eine punktsymmetrische Form aufweisen.

8. Radar-Gerät (10) nach einem der vorstehenden Ansprüche,
wobei die Verbindung zwischen dem ersten Transceiver (18) und der ersten Antenne (14) und/oder der zweiten Antenne (16)
und/oder
die Verbindung zwischen dem zweiten Transceiver (20) und der ersten Antenne (14) und/oder der zweiten Antenne (16) eine Mikrostreifenleitung (40) umfasst.

9. Radar-Gerät (10) nach einem der vorstehenden Ansprüche,
wobei die erste Antenne (14) und/oder die zweite Antenne (16) zwischen dem ersten Transceiver (18) und dem zweiten Transceiver (20) angeordnet ist.

10. Radar-Gerät (10) nach einem der vorstehenden Ansprüche,
umfassend eine Steuereinheit (30), welche sowohl mit dem ersten Transceiver (18) als auch mit dem zweiten Transceiver (20) in Signalverbindung steht und ausgebildet ist, von dem ersten Transceiver (18) erfasste Daten mit von dem zweiten Transceiver (20) erfassten Daten zu vergleichen.

11. Radar-Gerät (10) nach Anspruch 10,
wobei die Steuereinheit (30) ausgebildet ist, bei der Erkennung eines Unterschieds zwischen den von dem ersten Transceiver (18) erfassten Daten und den von dem zweiten Transceiver (20) erfassten Daten, ein Fehlersignal auszugeben.

12. Radar-Gerät (10) nach einem der vorstehenden Ansprüche,
wobei der erste Transceiver (18) und der zweite Transceiver (20) baugleich sind.

13. Verfahren zum Betreiben eines Radar-Geräts (10), bei welchem zumindest ein erster Transceiver (18) und ein zweiter Transceiver (20) mit einer ersten Antenne (14) und einer zweiten Antenne (16) verbunden werden und sowohl der erste Transceiver (18) als auch der zweite Transceiver (20) Funksignale über die erste und die zweite Antenne (16) senden und empfangen, wobei der erste Transceiver (18) die erste Antenne (14) als Sendeantenne und die zweite Antenne (16) als Empfangsantenne nutzt, **dadurch gekennzeichnet, dass** der zweite Transceiver (20) die zweite Antenne (16) als Sendeantenne und die erste Antenne (14) als Empfangsantenne nutzt.

## Claims

1. A radar device (10) comprising
- an antenna array (12) which has at least a first antenna (14) and a second antenna (16),
- at least a first transceiver (18) and a second transceiver (20),
wherein both the first transceiver (18) and the second transceiver (20) are in signal connection with the first antenna (14) and the second antenna (16), respectively,
wherein the first transceiver (18) is configured to use the first antenna (14) as a transmission antenna and the second antenna (16) as a reception antenna, **characterized in that** the second transceiver (20) is configured to use the second antenna (16) as a transmission antenna and the first antenna (14) as a reception antenna.

2. A radar device (10) according to claim 1,
wherein the first transceiver (18) and the second transceiver (20) are configured to use the first and/or second antenna (16) successively in time and/or in different frequency ranges.

3. A radar device (10) according to one of the preceding claims,
wherein the first antenna (14) comprises a first terminal for the first transceiver (18) and a second terminal, which is separate from the first terminal, for the second transceiver (20), and/or
wherein the second antenna (16) comprises a first terminal for the first transceiver (18) and a second terminal, which is separate from the first terminal, for the second transceiver (20).

4. A radar device (10) according to any one of the preceding claims,
wherein the first antenna (14) and/or the second antenna (16) comprises/comprise a plurality of part antennas (34).

5. A radar device (10) according to any one of the preceding claims,
wherein the antenna array (12) comprises a third antenna (38) which is in signal connection with the first and the second transceiver (20), wherein the first and/or the second transceiver (18, 20) is/are preferably configured to use the third antenna (38) as a reception antenna.

6. A radar device (10) according to claim 4 or 5,
wherein the first antenna (14) and the second antenna (16), and preferably the third antenna (38), have the same number of part antennas (34) or a different number of part antennas (34),
wherein preferably the part antennas (34) are each of identical design or at least some of them are of different designs.

7. A radar device (10) according to any one of the preceding claims,
wherein the first antenna (14) and/or the second antenna (16) comprises/comprise one or more patch antennas (36), at least some of which in particular have a symmetrical shape, preferably a point-symmetrical shape.

8. A radar device (10) according to any one of the preceding claims,
wherein the connection between the first transceiver (18) and the first antenna (14) and/or the second antenna (16)
and/or
the connection between the second transceiver (20) and the first antenna (14) and/or the second antenna (16)
comprises/comprise a microstrip line (40).

9. A radar device (10) according to any one of the preceding claims,
wherein the first antenna (14) and/or the second antenna (16) is/are arranged between the first transceiver (18) and the second transceiver (20).

10. A radar device (10) according to any one of the preceding claims, comprising a control unit (30) which is in signal connection with both the first transceiver (18) and the second transceiver (20) and which is configured to compare data acquired by the first transceiver (18) with data acquired by the second transceiver (20).

11. A radar device (10) according to claim 10,
wherein the control unit (30) is configured to output an error signal when a difference is recognized between the data acquired by the first transceiver (18) and the data acquired by the second transceiver (20).

12. A radar device (10) according to any one of the preceding claims,
wherein the first transceiver (18) and the second transceiver (20) are identical in construction.

13. A method of operating a radar device (10) in which at least a first transceiver (18) and a second transceiver (20) are connected to a first antenna (14) and a second antenna (16) and both the first transceiver (18) and the second transceiver (20) transmit and receive radio signals via the first and the second antenna (16),
wherein the first transceiver (18) uses the first antenna (14) as a transmission antenna and the second antenna (16) as a reception antenna, **characterized in that** the second transceiver (20) uses the second antenna (16) as a transmission antenna and the first antenna (14) as a reception antenna.

## Revendications

1. Dispositif radar (10) comprenant
- un réseau d'antennes (12) qui comprend au moins une première antenne (14) et une deuxième antenne (16),
- au moins un premier émetteur-récepteur (18) et un deuxième émetteur-récepteur (20),
dans lequel
le premier émetteur-récepteur (18) et le deuxième émetteur-récepteur (20) sont tous les deux en communication par signaux avec la première antenne (14) et avec la deuxième antenne (16),
le premier émetteur-récepteur (18) est conçu pour utiliser la première antenne (14) comme antenne d'émission et la deuxième antenne (16) comme antenne de réception,
**caractérisé en ce que**
le deuxième émetteur-récepteur (20) est conçu pour utiliser la deuxième antenne (16) comme antenne d'émission et la première antenne (14) comme antenne de réception.

2. Dispositif radar (10) selon la revendication 1,
dans lequel le premier émetteur-récepteur (18) et le deuxième émetteur-récepteur (20) sont conçus pour utiliser la première et/ou la deuxième antenne (16) successivement dans le temps et/ou dans des gammes de fréquences différentes.

3. Dispositif radar (10) selon l'une des revendications précédentes,
dans lequel la première antenne (14) comprend une première connexion pour le premier émetteur-récepteur (18) et une deuxième connexion, distincte de la première connexion, pour le deuxième émetteur-récepteur (20), et/ou
la deuxième antenne (16) comprend une première connexion pour le premier émetteur-récepteur (18) et une deuxième connexion, distincte de la première connexion, pour le deuxième émetteur-récepteur (20).

4. Dispositif radar (10) selon l'une des revendications précédentes, dans lequel la première antenne (14) et/ou la deuxième antenne (16) comprend une pluralité de sous-antennes (34).

5. Dispositif radar (10) selon l'une des revendications précédentes,
dans lequel le réseau d'antennes (12) comprend une troisième antenne (38) qui est en communication de signaux avec le premier et le deuxième émetteur-récepteur (20),
les premier et/ou deuxième émetteurs-récepteurs (20) sont de préférence conçus pour utiliser la troisième antenne (38) comme antenne de réception.

6. Dispositif radar (10) selon la revendication 4 ou 5,
dans lequel la première antenne (14) et la deuxième antenne (16), et de préférence la troisième antenne (38), possèdent un nombre identique ou différent de sous-antennes (34),
de préférence, les sous-antennes (34) sont identiques ou au moins en partie différentes.

7. Dispositif radar (10) selon l'une des revendications précédentes, dans lequel la première antenne (14) et/ou la deuxième antenne (16) comprennent une ou plusieurs antennes patch (36) qui présentent en particulier au moins en partie une forme de symétrie, de préférence de symétrie ponctuelle.

8. Dispositif radar (10) selon l'une des revendications précédentes,
dans lequel la connexion entre le premier émetteur-récepteur (18) et la première antenne (14) et/ou la deuxième antenne (16)
et/ou
la connexion entre le deuxième émetteur-récepteur (20) et la première antenne (14) et/ou la deuxième antenne (16)
comprend une ligne microruban (40).

9. Dispositif radar (10) selon l'une des revendications précédentes, dans lequel la première antenne (14) et/ou la deuxième antenne (16) est disposée entre le premier émetteur-récepteur (18) et le deuxième émetteur-récepteur (20).

10. Dispositif radar (10) selon l'une des revendications précédentes, comprenant une unité de commande (30) qui est en communication par signaux avec le premier émetteur-récepteur (18) et également avec le deuxième émetteur-récepteur (20) et qui est conçue pour comparer les données acquises par le premier émetteur-récepteur (18) aux données acquises par le deuxième émetteur-récepteur (20).

11. Dispositif radar (10) selon la revendication 10,
dans lequel l'unité de commande (30) est conçue pour émettre un signal d'erreur lorsqu'elle détecte une différence entre les données acquises par le premier émetteur-récepteur (18) et les données acquises par le deuxième émetteur-récepteur (20).

12. Dispositif radar (10) selon l'une des revendications précédentes, dans lequel le premier émetteur-récepteur (18) et le deuxième émetteur-récepteur (20) sont de construction identique.

13. Procédé de fonctionnement d'un dispositif radar (10),
dans lequel au moins un premier émetteur-récepteur (18) et un deuxième émetteur-récepteur (20) sont connectés à une première antenne (14) et à une deuxième antenne (16), et le premier émetteur-récepteur (18) et le deuxième émetteur-récepteur (20) émettent et reçoivent tous les deux des signaux radio via la première et la deuxième antenne (16),
le premier émetteur-récepteur (18) utilise la première antenne (14) comme antenne d'émission et la deuxième antenne (16) comme antenne de réception,
**caractérisé en ce que**
le deuxième émetteur-récepteur (20) utilise la deuxième antenne (16) comme antenne d'émission et la première antenne (14) comme antenne de réception.
